# EUROPÄISCHE PATENTSCHRIFT

(11) **EP 1 127 760 B1**
(45) Veröffentlichungstag und Bekanntmachung des Hinweises auf die Patenterteilung: **10.12.2003**
(21) Anmeldenummer: 01101233.3
(22) Anmeldetag: 19.01.2001
(51) Int. Cl.: B60T 7/10

(54) **Betätigungsvorrichtung für eine Feststellbremse**
Parking brake hand control device
Dispositif de contrôle d'un frein de stationnement

(30) Priorität: 16.02.2000 DE 10006827
(43) Veröffentlichungstag der Anmeldung: 29.08.2001
(73) Patentinhaber: Dietz-automotive GmbH & Co. KG, 73265 Dettingen unter Teck (DE)
(72) Erfinder: Bauer, Hans, 73265 Dettingen/Teck (DE)
(74) Vertreter: Ruckh, Rainer Gerhard, Dr.

(56) Entgegenhaltungen:
- DE-A- 19 521 159
- DE-A- 19 737 738
- DE-B- 1 033 044
- US-A- 5 205 184

## Beschreibung

Die Erfindung betrifft eine Betätigungsvorrichtung für eine Feststellbremse gemäß dem Oberbegriff des Anspruchs 1.

Eine derartige Betätigungsvorrichtung ist aus der DE 195 21 159 C2 bekannt. Diese Betätigungsvorrichtung umfasst einen Handbremshebel, der in einem Lagerbock schwenkbar gelagert ist. Dabei kann über eine Festsetzeinrichtung, welche aus einem Sperrsegment und einer über eine Betätigungsstange bewegbare Sperrklinke besteht, der Handbremshebel in seinen verschiedenen Stellungen zur Betätigung der Feststellbremse verstellt werden.

Der Handbremshebel besteht im wesentlichen aus zwei Hebelseitenteilen, die in Form von Schalen ausgebildet sind. Die Schalen weisen an ihren Innenseiten Anformungen auf, welche eine Lagerung der Festsetzeinrichtung sowie der Betätigungsstange ermöglichen. Dabei ist die Betätigungsstange in einer rohrförmig ausgebildeten Anformung der Schalen geführt.

Zur Montage des Handbremshebels müssen die Festsetzeinrichtung und die Betätigungsstange zunächst in den Schalen montiert werden. Dann werden die Schalen zusammengefügt und mittels Schrauben oder dergleichen miteinander verbunden. Anschließend wird eine Abdeckblende auf die Oberseite der Schalen aufgebracht und dort durch Rastmittel oder dergleichen fixiert. Schließlich wird auf das als Ansatz ausgebildete Vorderende des Handbremshebels ein Handgriff sowie ein Druckknopf zur Betätigungsstange aufgebracht.

Nachteilig bei einem derartigen Handbremshebel ist dessen relativ aufwendiger mechanischer Aufbau, wobei insbesondere nachteilig ist, dass der Handbremshebel aus mehreren Einzelteilen besteht, deren Montage einen beträchtlichen Zeitaufwand erfordert.

Der Erfindung liegt die Aufgabe zugrunde eine Betätigungsvorrichtung der eingangs genannten Art so auszubilden, dass diese bei möglichst freier Formgebung kostengünstig herstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Betätigungsvorrichtung weist einen Handbremshebel mit einem einstückig ausgebildeten Betätigungshebel auf. Der Betätigungshebel besteht dabei aus einem Kunststoff-Spritzteil oder einem aus einer Leichtmetall-Legierung bestehenden Gussteil.

Die Herstellung des Betätigungshebels erfolgt somit mittels eines Spritzgießverfahrens oder eines Gießverfahrens. Durch entsprechend ausgebildete Gießformen kann die Form des Betätigungshebels äußerst variabel ausgebildet werden.

Weiterhin ist vorteilhaft, dass derartige Formteile kostengünstig herstellbar sind.

Ein weiterer wesentlicher Vorteil besteht darin, dass der Handbremshebel nur eine geringe Anzahl von Einzelteilen aufweist und besonders einfach und ohne großen Zeitaufwand montierbar ist.

Besonders vorteilhaft dabei ist, dass die Betätigungsstange seitlich am Betätigungshebel beweglich gelagert ist. Dabei wird ein als Stangensegment ausgebildeter Teil der Betätigungsstange in eine seitlich an dem Betätigungshebel ausmündende Aufnahme des Betätigungshebels eingelegt. Die Aufnahme erstreckt sich dabei in Längsrichtung eines von einem Grundkörper des Betätigungshebels hervorstehenden Ansatzes. Zur Fixierung der Betätigungsstange dient der Handgriff des Bremshebels, der auf den einen Ansatz bildenden Teil des Betätigungshebels und das daran anliegende Stangensegment aufgesteckt wird.

Auch die Festsetzeinrichtung kann auf einfache Weise an der Außenseite des Betätigungshebels und am Lagerbock montiert werden.

Dabei wird besonders vorteilhaft die Sperrklinke der Festsetzeinrichtung an die Außenseite des Betätigungshebels geführt und dort eingerastet.

Weiterhin ist vorteilhaft, dass die Betätigungsstange einen einstückig mit dieser ausgebildeten Arm aufweist, der in Eingriff mit der Sperrklinke steht, wobei die Ankopplung der Sperrklinke an den Arm bereits mit dem Einrasten der Sperrklinke am Betätigungshebel bewirkt wird. Auch diese Ankopplung trägt zu einem geringen Montageaufwand bei.

Die Erfindung wird im nachstehenden anhand der Zeichnungen erläutert. Es zeigen:
- Figur 1:: Perspektivische Darstellung eines Ausführungsbeispiels der erfindungsgemäßen Betätigungsvorrichtung mit einem in einem Lagerbock gelagerten Handbremshebel.
- Figur 2:: Perspektivische Darstellung der einzelnen Komponenten des Handbremshebels gemäß Figur 1.

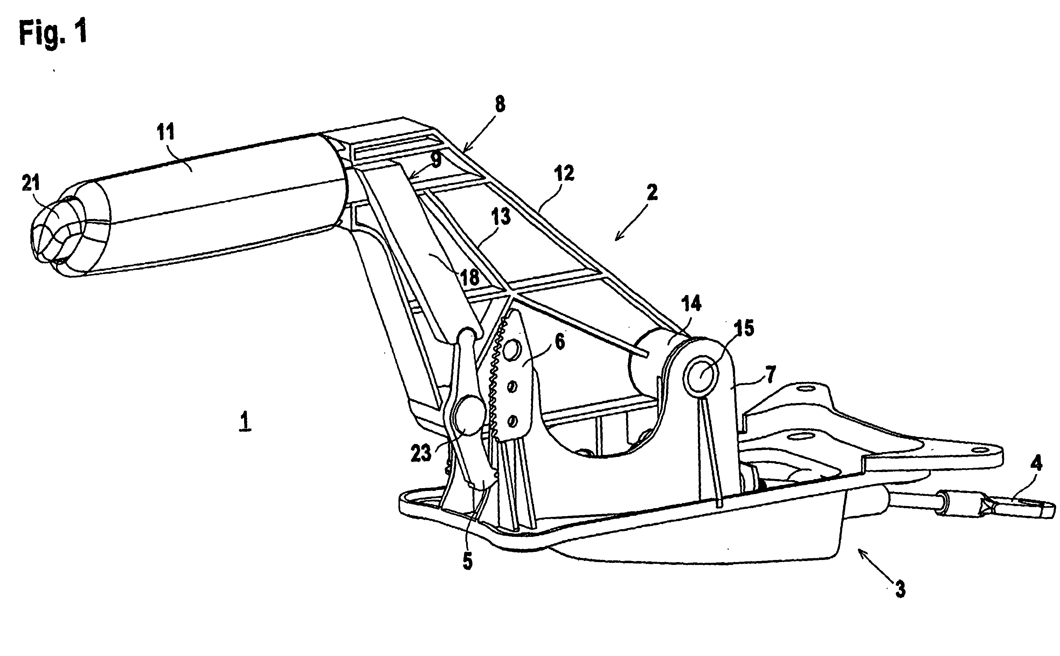

Figur 1 zeigt ein Ausführungsbeispiel einer Betätigungsvorrichtung 1 für eine Feststellbremse eines Fahrzeugs. Die Betätigungsvorrichtung 1 umfasst einen Handbremshebel 2, welcher an einem Lagerbock 3 schwenkbar gelagert ist.

Zudem ist am Lagerbock 3 eine Zugstange 4 gelagert, die mit dem Handbremshebel 2 gekoppelt ist. Die jeweilige Stellung des Handbremshebels 2 wird über diese Zugstange 4 auf die nicht dargestellte Feststellbremse des Fahrzeugs übertragen.

Über eine Festsetzeinrichtung wird der Handbremshebel 2 in seinen verschiedenen Stellungen zur Betätigung der Feststellbremse eingestellt. Diese Festsetzeinrichtung besteht aus einer am Handbremshebel 2 schwenkbar gelagerten Sperrklinke 5 und einem Sperrsegment 6, welches an einem Halteschenkel 7 des Lagerbocks 3 gelagert ist.

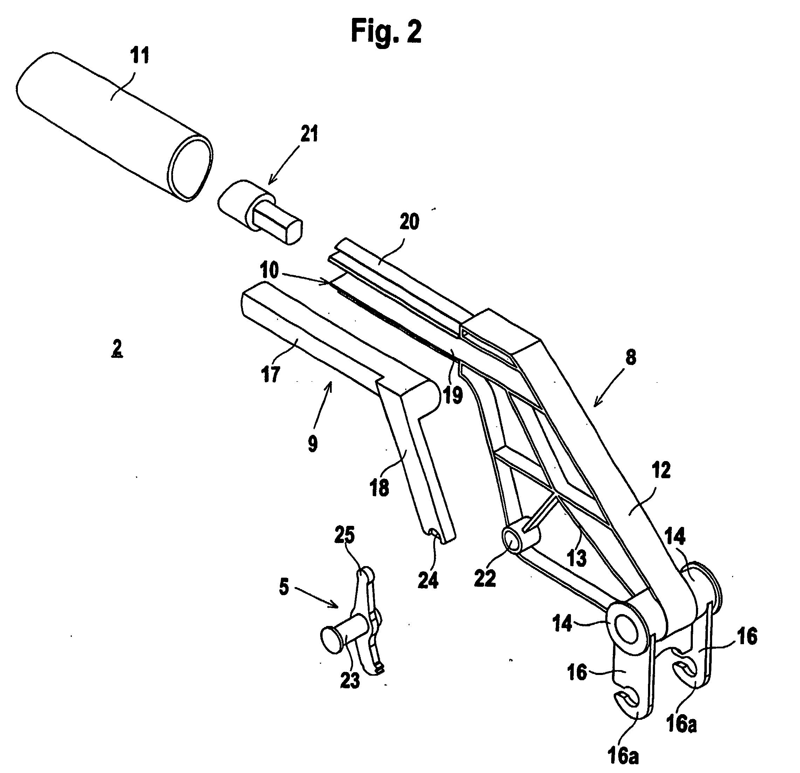

Die einzelnen Komponenten des erfindungsgemäßen Handbremshebels 2 sind in Figur 2 dargestellt. Der Handbremshebel 2 weist einen einstückig ausgebildeten Betätigungshebel 8 auf. Der Betätigungshebel 8 besteht aus einem Kunststoff-Spritzteil oder einem Gussteil aus einer Leichtmetall-Legierung. Vorzugsweise besteht das Gussteil aus einer Aluminium- oder Magnesium-Legierung.

Zudem weist der Handbremshebel 2 eine Betätigungsstange 9 auf. Die Betätigungsstange 9 besteht ebenfalls aus einem Kunststoff-Spritzteil oder einem Gussteil.

Durch eine geeignete Vorgabe der Gießformen können der Betätigungshebel 8 und die Betätigungsstange 9 in einer großen Formenvielfalt hergestellt werden. Insbesondere kann der Betätigungshebel 8 bei einem relativ breiten Querschnitt einen Aufbau aufweisen, welcher bei geringem Gewicht eine hohe Stabilität gewährleistet.

Weiterhin ist vorteilhaft, dass durch die variable Formgestaltung des Betätigungshebels 8 und der Betätigungsstange 9 die Form des Handbremshebels 2 flexibel an Designvorgaben oder ergonomische Anforderungen angepasst werden kann.

Der Betätigungshebel 8 weist einen Grundkörper auf, von welchem ein im wesentlichen horizontal verlaufender Ansatz 10 hervorsteht, der zur Aufnahme eines Handgriffs 11 dient.

Der Grundkörper des Betätigungshebels 8 weist einen im wesentlichen trapezförmig ausgebildeten Rahmen 12 auf, der in Umfangsrichtung des Grundkörpers umläuft. Von der Innenseite des Rahmens 12 laufen fünf Verstrebungen 13 sternförmig auf einen Verzweigungspunkt zu und sind dort miteinander verbunden. Die Verstrebungen 13 und der Rahmen 12 weisen eine relativ große Breite auf, so dass der Grundkörper stabil gegen seitliches Verbiegen ist. Durch den über die Verstrebungen 13 gestützten Rahmen 12 weist der Grundkörper eine hohe Formstabilität bei gleichzeitig geringem Gewicht auf.

Am unteren Ende des Rahmens 12 sind zwei einstückig mit diesem ausgebildete Lagerzapfen 14 angeordnet. Die Lagerzapfen 14 sind im wesentlichen zylindrisch ausgebildet und liegen koaxial zueinander. Die Lagerzapfen 14 stehen an den beiden Seitenflächen des Grundkörpers seitlich über diesen hervor. Wie in Figur 1 dargestellt wird zur Befestigung des Handbremshebels 2 am Lagerbock 3 in die Lagerzapfen 14 eine Welle 15 eingeführt, welche in Bohrungen der Halteschenkel 7 des Lagerbocks 3 greift.

Wie insbesondere aus Figur 2 ersichtlich ist, münden an den Unterseiten der Lagerzapfen 14 Stege 16 aus. Jeder Steg 16 ist im vorderen Bereich eines Lagerzapfens 14 angeordnet. Die Stege 16 verlaufen parallel zueinander und weisen in ihren freien Enden eine hakenförmige Aufnahme 16 a auf. Mit diesen Aufnahmen 16 a wird die Zugstange 4 an den Betätigungshebel 8 des Handbremshebels 2 gekoppelt. Durch die so hergestellte Verbindung wird die Bewegung des Handbremshebels 2 auf die Zugstange 4 übertragen.

Erfindungsgemäß ist die Betätigungsstange 9 am Betätigungshebel 8 seitlich beweglich gelagert. Dabei besteht die Betätigungsstange 9 im wesentlichen aus einem Stangensegment 17 und einem an das Stangensegment 17 anschließenden Arm 18.

Das Stangensegment 17 ist an die Länge des Ansatzes 10 des Betätigungshebels 8 angepasst. Der Arm 18 mündet am hinteren Ende des Stangensegments 17 an dessen Rückseite aus und verläuft in einem Winkel zwischen 90° und 180° zum Stangensegment 17.

Das Stangensegment 17 der Betätigungsstange 9 wird in eine Aufnahme 19 an einer Seitenfläche des Ansatzes 10 des Betätigungshebels 8 eingesetzt. Von dem auf diese Weise horizontal gelagerten Stangensegment 17 mündet der Arm 18 an dem hinteren Ende des Stangensegments 17 aus und verläuft entlang einer Seitenfläche des Grundkörpers in schrägem Winkel nach unten.

Dabei ist der Arm 18 auf einer auf den Rahmen 12 des Grundkörpers zulaufenden Verstrebung 13 geführt. Damit der Arm 18 sicher auf der Verstrebung 13 anliegt, kann diese gegenüber den anderen Verstrebungen 13 leicht erhöht sein.

Die Aufnahme 19, in welche das Stangensegment 17 eingelegt wird, verläuft in Längsrichtung des Ansatzes 10 und weist die Form einer zur Seitenwand des Ansatzes 10 offenen Schale auf. Die Schale weist einen halbkreisförmigen Querschnitt auf, der über die gesamte Länge der Schale konstant ist.

Das Stangensegment 17 weist eine entsprechend der Form der Schale ausgeformte Seitenwand auf, so dass dieser Abschnitt des Stangensegments 17 formschlüssig in der Schale anliegt. Dabei ist das Stangensegment 17 in der Schale in Längsrichtung verschiebbar gelagert.

Bei der in dem Ansatz 10 gelagerten Betätigungsstange 9 steht der rückseitige Teil des Stangensegments 17 über den oberen Rand der Schale hervor. Die Mantelflächen des Stangensegments 17 und des Ansatzes 10 schließen im wesentlichen bündig aneinander an und ergänzen sich zu einer im wesentlichen zylindrischen Aufnahme, auf die der Handgriff 11 des Handbremshebels 2 aufgesetzt werden kann.

Der Handgriff 11 weist einen im wesentlichen hohlzylindrischen Aufbau auf, wobei die Kontur der Innenwand des Handgriffs 11 an die Kontur der von den Mantelflächen des Stangensegments 17 und des Ansatzes 10 gebildeten Aufnahme angepasst ist. Damit liegt der auf dem Handbremshebel 2 aufgesetzte Handgriff 11 mit seinen Innenwänden dicht an dem Stangensegment 17 und dem Ansatz 10 an und sichert dadurch die Betätigungsstange 9 gegen ein Ablösen von dem Betätigungshebel 8. Zur Verbesserung des Halts des Handgriffs 11 sind an dem Ansatz 10 Führungsrippen 20 vorgesehen, die von der Mantelfläche des Ansatzes 10 hervorstehen und in dessen Längsrichtung verlaufen. Der Innenraum des Handgriffs 11 weist entsprechend den Führungsrippen 20 ausgebildete, nicht dargestellte Führungsmittel auf, in welchen die Führungsrippen 20 geführt sind. Zur Fixierung des Handgriffs 11 am Betätigungshebel 8 sind ebenfalls nicht dargestellte Rastmittel vorgesehen.

Das Stangensegment 17 der Betätigungsstange 9 weist an seiner vorderen Stirnseite eine nicht dargestellte Ausnehmung auf, in welche ein Druckknopf 21 zur Betätigung der Betätigungsstange 9 einführbar ist. Vorzugsweise ist der Druckknopf 21 durch Rastmittel in der Ausnehmung gehalten. Das Vorderende des Druckknopfes 21 steht über eine Öffnung an der Vorderseite des Handgriffs 11 hervor und kann damit vom Fahrer des Fahrzeugs betätigt werden.

Die am Betätigungshebel 8 gelagerte Betätigungsstange 9 steht im Eingriff mit der Sperrklinke 5. Dabei ist die Sperrklinke 5 am Grundkörper des Betätigungshebels 8 schwenkbar gelagert. Hierzu ist am unteren Ende des Rahmens 12 des Grundkörpers eine Fassung mit einer zylindrischen Bohrung 22 vorgesehen. Zur Lagerung der Sperrklinke 5 ist an dieser ein Niet 23 vorgesehen, der in die Bohrung 22 einführbar ist.

Das untere freie Ende des Arms 18 der Betätigungsstange 9 verläuft auf das obere Ende der Sperrklinke 5 zu.

Am unteren Rand des Armes 18 ist eine Aussparung 24 vorgesehen, die an die Form des oberen Endes der Sperrklinke 5 angepasst ist. Dieses obere Ende ist dabei in Form eines Kreisscheibensegments 25 ausgebildet. Entsprechend verläuft auch der Rand der Aussparung 24 am Arm 18 entlang eines Kreisbogens mit entsprechendem Radius.

Während des Einrastens des Niets 23 der Sperrklinke 5 in die Bohrung 22 am Grundkörper des Betätigungshebels 8 wird gleichzeitig das obere Ende der Sperrklinke 5 in die Aussparung 24 am unteren Rand des Armes 18 eingelegt.

Durch diese Ankopplung des Armes 18 an die Sperrklinke 5 wird erreicht, dass bei einer Längsverschiebung des Stangenelements der Betätigungsstange 9 in der Aufnahme 19 des Ansatzes 10 die Sperrklinke 5 über den Arm 18 um die in der Symmetrieachse der Bohrung 22 liegende Schwenkachse geschwenkt wird.

Bei angezogenem Handbremshebel 2 verrastet die Sperrklinke 5 mit dem Sperrsegment 6. Die Rastung zwischen der Sperrklinke 5 und dem Sperrsegment 6 wird durch Betätigung des Druckknopfes 21 am Handbremshebel 2 gelöst, wobei durch die Bewegung des Handbremshebels 2 die Sperrklinke 5 gegenüber dem Sperrsegment 6 geschwenkt wird.

### Bezugszeichenliste

- (1): Betätigungsvorrichtung
- (2): Handbremshebel
- (3): Lagerbock
- (4): Zugstange
- (5): Sperrklinke
- (6): Sperrsegment
- (7): Halteschenkel
- (8): Betätigungshebel
- (9): Betätigungsstange
- (10): Ansatz
- (11): Handgriff
- (12): Rahmen
- (13): Verstrebung
- (14): Lagerzapfen
- (15): Welle
- (16): Steg
- (16a): Aufnahme
- (17): Stangensegment
- (18): Arm
- (19): Aufnahme
- (20): Führungsrippen
- (21): Druckknopf
- (22): Bohrung
- (23): Niet
- (24): Aussparung
- (25): Kreisscheibensegment

## Patentansprüche

1. Betätigungsvorrichtung für eine Feststellbremse eines Fahrzeugs mit einem an einem Lagerbock schwenkbar gelagerten Handbremshebel, **dadurch gekennzeichnet, dass** der Handbremshebel (2) einen einstückig ausgebildeten, aus einem Kunststoff-Spritzteil oder einem aus einer Leichtmetall-Legierung gebildeten Gussteil bestehenden Betätigungshebel (8) aufweist, an welchem eine Betätigungsstange (9) seitlich beweglich gelagert ist.

2. Betätigungsvorrichtung nach Anspruch 1, **dadurch gekennzeichnet, dass** die Betätigungsstange (9) aus einem Kunststoff-Spritzteil oder einem Gussmetall aus einer Leichtmetall-Legierung besteht.

3. Betätigungsvorrichtung nach einem der Ansprüche 1 oder 2, **dadurch gekennzeichnet, dass** das oder jedes Gussteil aus einer Aluminium- oder Magnesium-Legierung besteht.

4. Betätigungsvorrichtung nach einem der Ansprüche 1 - 3, **dadurch gekennzeichnet, dass** der Betätigungshebel (8) einen Grundkörper und einen von diesem hervorstehenden Ansatz (10) mit einer in Längsrichtung verlaufenden Aufnahme (19) aufweist, wobei ein Stangensegment (17) der Betätigungsstange (9) in der Aufnahme (19) in Längsrichtung verschiebbar gelagert ist.

5. Betätigungsvorrichtung nach Anspruch 4, **dadurch gekennzeichnet, dass** die Aufnahme (19) in Form einer zu einer Seitenwand des Ansatzes (10) offenen Schale ausgebildet ist, in welcher die entsprechend ausgeformte Seitenwand des Stangensegments (17) formschlüssig geführt ist.

6. Betätigungsvorrichtung nach Anspruch 5, **dadurch gekennzeichnet, dass** die Schale einen halbkreisförmigen Querschnitt aufweist.

7. Betätigungsvorrichtung nach einem der Ansprüche 4 - 6, **dadurch gekennzeichnet, dass** auf den Ansatz (10) mit dem in der Aufnahme (19) liegenden Stangensegment (17) ein hohlzylindrischer Handgriff (11) aufsetzbar ist, wobei die Außenseiten des Ansatzes (10) und der Betätigungsstange (9) dicht an der Innenwand des Handgriffs (11) anliegen.

8. Betätigungsvorrichtung nach Anspruch 7, **dadurch gekennzeichnet, dass** von der Außenseite des Ansatzes (10) Führungsrippen (20) zur Fixierung des Handgriffs (11) hervorstehen, wobei die Führungsrippen (20) in Längsrichtung des Ansatzes (10) verlaufen.

9. Betätigungsvorrichtung nach einem der Ansprüche 4 - 8, **dadurch gekennzeichnet, dass** am vorderen Ende des in der Aufnahme (19) gelagerten Stangensegments (17) der Betätigungsstange (9) eine Ausnehmung vorgesehen ist, in welche ein Druckknopf (21) einrastbar ist, welcher über das offene Vorderende des Handgriffs (11) hervorsteht.

10. Betätigungsvorrichtung nach einem der Ansprüche 4 - 9, **dadurch gekennzeichnet, dass** ein von dem hinteren Ende des Stangensegments (17) der Betätigungsstange (9) abstehender Arm (18) vorgesehen ist, welcher in Eingriff mit einer Sperrklinke (5) steht.

11. Betätigungsvorrichtung nach Anspruch 10, **dadurch gekennzeichnet, dass** die Sperrklinke (5) mit einem Sperrsegment (6) eine Festsetzeinrichtung bildet, wobei die Sperrklinke (5) am Grundkörper des Betätigungshebels (8) schwenkbar gelagert ist, und wobei das Sperrsegment (6) an einem Halteschenkel (7) des Lagerbocks (3) gelagert ist.

12. Betätigungsvorrichtung nach Anspruch 11, **dadurch gekennzeichnet, dass** zur Lagerung der Sperrklinke (5) ein Niet (23) vorgesehen ist, der in eine Bohrung (22) im Grundkörper des Betätigungshebels (8) einführbar ist.

13. Betätigungsvorrichtung nach einem der Ansprüche 10 - 12, **dadurch gekennzeichnet, dass** das obere Ende der Sperrklinke (5) in eine Aussparung (24) am freien unteren Ende des Arms (18) der Betätigungsstange (9) greift, so dass durch Verschieben der Betätigungsstange (9) am Betätigungshebel (8) die Sperrklinke (5) geschwenkt wird.

14. Betätigungsvorrichtung nach einem der Ansprüche 10 - 13, **dadurch gekennzeichnet, dass** der Arm (18) an der Rückseite des Stangensegments (17) ausmündet und in einem Winkel zwischen 90° und 180° zu dem Stangensegment (17) verläuft.

15. Betätigungsvorrichtung nach Anspruch 14, **dadurch gekennzeichnet, dass** der Arm (18) am Grundkörper anliegt.

16. Betätigungsvorrichtung nach Anspruch 15, **dadurch gekennzeichnet, dass** der Grundkörper aus einem Rahmen (12) besteht, von dessen Innenseiten Verstrebungen (13) auf einen gemeinsamen Verzweigungspunkt zulaufen, und dass der Arm (18) an einer der Verstrebungen (13) anliegt.

17. Betätigungsvorrichtung nach Anspruch 16, **dadurch gekennzeichnet, dass** am unteren Ende des Rahmens (12) des Grundkörpers zwei Lagerzapfen (14) seitlich hervorstehen, in welcher eine Welle (15) geführt ist, welche in Bohrungen der Halteschenkel (7) des Lagerbocks (3) greift.

18. Betätigungsvorrichtung nach Anspruch 17, **dadurch gekennzeichnet, dass** von der Unterseite jedes Lagerzapfens (14) jeweils ein Steg (16) hervorsteht, wobei die parallel zueinander verlaufenden Stege (16) zur Fixierung einer Zugstange (4) dienen.

## Claims

1. Actuating device for a parking brake of a vehicle, with a handbrake lever pivotably mounted at a bearing bracket, **characterised in that** the handbrake lever (2) comprises an integrally formed actuating lever (8) which consists of a synthetic material injection-moulded part or of a cast part formed from a light metal alloy and at which an actuating rod (9) is mounted to be movable at the side.

2. Actuating device according to claim 1, **characterised in that** the actuating rod (9) consists of a synthetic material injection-moulded part or of a cast metal of a light metal alloy.

3. * Actuating device according to one of claims 1 ahd 2, **characterised in that** the or each cast part consists of an aluminium alloy or a magnesium alloy.

4. Actuating device according to one of claims 1 to 3, **characterised in that** the actuating lever (8) comprises a base body and a projection (10), which projects therefrom, with a receptacle (19) extending in longitudinal direction, wherein a rod segment (17) of the actuating rod (9) is mounted in the receptacle (19) to be displaceable in longitudinal direction.

5. Actuating device according to claim 4, **characterised in that** the receptacle (19) is constructed in the form of a shell which is open towards the side wall of the projection (10) and in which the correspondingly shaped side wall of the rod segment (17) is guided in mechanically positive manner.

6. Actuating device according to claim 5, **characterised in that** the shell has a semicircular cross-section.

7. Actuating device according to one of claims 4 to 6, **characterised in that** a hollow-cylindrical handle (11) can be placed on the projection (10) with the rod segment (17) lying in the receptacle (19), wherein the outer sides of the projection (10) and the actuating rod (9) bear tightly against the inner wall of the handle (11 ).

8. Actuating device according to claim 7, **characterised in that** guide ribs (20) for fixing the handle (11) protrude from the outer side of the projection (10), wherein the guide ribs (20) extend in longitudinal direction of the projection (10).

9. Actuating device according to one of claims 4 to 8, **characterised in that** a recess, in which a press button (21) projecting beyond the open front end of the handle (11) can be detented, is provided at the front end of the rod segment (17), which is mounted in the receptacle (19), of the actuating rod (9).

10. Actuating device according to one of claims 4 to 9, **characterised in that** an arm (18), which juts out from the rear end of the rod segment (17) of the actuating rod (9) and which is disposed in engagement with a pawl (5), is provided.

11. Actuating device according to claim 10, **characterised in that** the pawl (5) together with a blocking segment (6) forms a fixing device, wherein the pawl (5) is pivotably mounted at the base body of the actuating lever (8) and wherein the blocking segment (6) is mounted at a mounting limb (7) of the bearing bracket (3).

12. Actuating device according to claim 11, **characterised in that** a rivet (23), which is insertable in a bore (22) in the base body of the actuating lever (8), is provided for mounting the pawl (5).

13. Actuating device according to one of claims 10 to 12, **characterised in that** the upper end of the pawl (5) engages in a cut-out (24) at the free lower end of the arm (18) of the actuating rod (9) so that the pawl (5) is pivoted by displacement of the actuating rod (9) at the actuating lever (8).

14. Actuating device according to one of claims 10 to 13, **characterised in that** the arm (18) opens out at the rear side of the rod segment (17) and extends at an angle between 90° and 180° relative to the rod segment (17).

15. Actuating device according to claim 14, **characterised in that** the arm (18) bears against the base body.

16. Actuating device according to claim 15, **characterised in that** the base body consists of a frame (12), from the inner side of which webs (13) extend to a common branch point, and that the arm (18) bears against the webs (13).

17. Actuating device according to claim 16, **characterised in that** two bearing pins (14), in which a shaft (15) engaging in bores of the mounting limb (7) of the bearing bracket (3) is guided, project laterally at the lower end of the frame (12) of the base body.

18. Actuating device according to claim 17, **characterised in that** a respective web (16) projects from the underside of each bearing pin (14), wherein the webs (16) extending parallel to one another serve for fixing a pull rod (4).

## Revendications

1. Dispositif d'actionnement d'un frein de stationnement de véhicule, comportant un levier de freinage manuel monté à pivotement sur un sabot de montage, **caractérisé par le fait que** ledit levier (2) de freinage manuel présente un levier d'actionnement (8) de réalisation monobloc, constitué d'une pièce venue d'injection en matière plastique ou d'une pièce venue de coulée en un alliage de métaux légers, sur lequel une tige d'actionnement (9) est montée avec mobilité latérale.

2. Dispositif d'actionnement selon la revendication 1, **caractérisé par le fait que** la tige d'actionnement (9) est constituée d'une pièce venue d'injection en matière plastique, ou d'une pièce métallique coulée en un alliage de métaux légers.

3. Dispositif d'actionnement selon l'une des revendications 1 ou 2, **caractérisé par le fait que** la ou chaque pièce venue de coulée consiste en un alliage d'aluminium ou de magnésium.

4. Dispositif d'actionnement selon l'une des revendications 1-3, **caractérisé par le fait que** le levier d'actionnement (8) comprend un corps de base et un appendice (10) saillant au-delà de ce dernier, muni d'un logement (19) s'étendant dans la direction longitudinale, un segment (17) de la tige d'actionnement (9) étant monté dans ledit logement (19) avec faculté de coulissement dans la direction longitudinale.

5. Dispositif d'actionnement selon la revendication 4, **caractérisé par le fait que** le logement (19) est réalisé sous la forme d'une coquille qui est ouverte en direction d'une paroi latérale de l'appendice (10) et dans laquelle la paroi latérale du segment (17) de la tige, offrant une configuration correspondante, est guidée par concordance de formes.

6. Dispositif d'actionnement selon la revendication 5, **caractérisé par le fait que** la coquille présente une section transversale semi-circulaire.

7. Dispositif d'actionnement selon l'une des revendications 4-6, **caractérisé par le fait qu'**une poignée cylindrique creuse (11) peut être mise en place sur l'appendice (10), avec le segment (17) de la tige situé dans le logement (19), les faces extérieures dudit appendice (10) et de la tige d'actionnement (9) portant intimement contre la paroi intérieure de ladite poignée (11).

8. Dispositif d'actionnement selon la revendication 7, **caractérisé par le fait que** des nervures de guidage (20), destinées au verrouillage à demeure de la poignée (11), font saillie au-delà de la face extérieure de l'appendice (10), lesdites nervures de guidage (20) s'étendant dans la direction longitudinale dudit appendice (10).

9. Dispositif d'actionnement selon l'une des revendications 4-8, **caractérisé par le fait qu'**il est prévu, à l'extrémité antérieure du segment (17) de la tige d'actionnement (9) situé dans le logement (19), un évidement dans lequel peut être encliqueté un bouton-poussoir (21) dépassant de l'extrémité antérieure ouverte de la poignée (11).

10. Dispositif d'actionnement selon l'une des revendications 4-9, **caractérisé par le fait qu'**il est prévu un bras (18) qui fait saillie au-delà de l'extrémité postérieure du segment (17) de la tige d'actionnement (9), et est en prise avec un cliquet de blocage (5).

11. Dispositif d'actionnement selon la revendication 10, **caractérisé par le fait que** le cliquet de blocage (5) forme un dispositif d'immobilisation en association avec un segment de blocage (6), ledit cliquet de blocage (5) étant monté à pivotement sur le corps de base du levier d'actionnement (8), et ledit segment de blocage (6) étant monté sur une branche de retenue (7) du sabot de montage (3).

12. Dispositif d'actionnement selon la revendication 11, **caractérisé par le fait qu'**un rivet (23), prévu pour assurer le montage du cliquet de blocage (5), peut être inséré dans un perçage (22) pratiqué dans le corps de base du levier d'actionnement (8).

13. Dispositif d'actionnement selon l'une des revendications 10-12, **caractérisé par le fait que** l'extrémité supérieure du cliquet de blocage (5) pénètre dans une échancrure (24) ménagée à l'extrémité inférieure libre du bras (18) de la tige d'actionnement (9), de sorte que ledit cliquet de blocage (5) est animé d'un pivotement par coulissement de ladite tige d'actionnement (9) sur le levier d'actionnement (8).

14. Dispositif d'actionnement selon l'une des revendications 10-13, **caractérisé par le fait que** le bras (18) s'achève à la face postérieure du segment (17) de la tige et s'étend, vis-à-vis dudit segment (17) de la tige, selon un angle compris entre 90° et 180°.

15. Dispositif d'actionnement selon la revendication 14, **caractérisé par le fait que** le bras (18) est appliqué contre le corps de base.

16. Dispositif d'actionnement selon la revendication 15, **caractérisé par le fait que** le corps de base est constitué d'un cadre (12) à partir des faces intérieures duquel des membrures de rigidification (13) convergent vers un point commun de bifurcation ; et **par le fait que** le bras (18) porte contre l'une desdites membrures de rigidification (13).

17. Dispositif d'actionnement selon la revendication 16, **caractérisé par** la présence, à l'extrémité inférieure du cadre (12) du corps de base, de deux coussinets de portée (14) saillant latéralement, dans lesquels est guidé un arbre (15) s'engageant dans des perçages des branches de retenue (7) du sabot de montage (3).

18. Dispositif d'actionnement selon la revendication 17, **caractérisé par le fait qu'**une aile (16) respective fait saillie au-delà de la face inférieure de chaque coussinet de portée (14), les ailes (16), s'étendant parallèlement l'une à l'autre, servant au verrouillage à demeure d'une tige de traction (4).
